# EUROPEAN PATENT SPECIFICATION

(11) **EP 1 993 976 B1**
(45) Date of publication and mention of the grant of the patent: **21.10.2015**
(21) Application number: 07797085.3
(22) Date of filing: 18.01.2007
(51) Int. Cl.: C05C 9/00, C05C 9/02, C05C 1/00, C05G 3/00, C08G 12/12

(54) **HIGH NITROGEN LIQUID FERTILIZER**
FLÜSSIGDÜNGER MIT HOHEM STICKSTOFFGEHALT
ENGRAIS LIQUIDE À FORTE TENEUR EN AZOTE

(30) Priority: 21.02.2006 US 357409
(43) Date of publication of application: 26.11.2008
(73) Proprietor: Koch Agronomic Services, LLC, Wichita, Kansas 67220 (US)
(72) Inventor: PHILLIPS, James C., Peachtree City, GA 30269 (US); WERTZ, Stacey L., Conyers, GA 30013 (US); GABRIELSON, Kurt D., Lilburn, GA 30047 (US)
(74) Representative: Carpmaels & Ransford LLP
(86) International application number: PCT/US2007/060681
(87) International publication number: WO 2007/133821

(56) References cited:
- WO-A2-2007/087180
- US-A- 3 092 486
- US-A- 3 515 533
- US-A- 4 304 588
- US-A- 4 554 005
- US-A- 4 599 102
- US-A- 4 778 510
- US-A1- 2002 043 086
- US-B1- 6 306 194

## Description

The present invention is directed to a liquid fertilizer composition having a high nitrogen content. The invention is particularly directed to an aqueous liquid fertilizer comprising a mixture of a concentrated aqueous solution of a urea-formaldehyde resin and a separate nitrogen fertilizer source selected from the group consisting of ammonium nitrate, urea and a mixture of ammonium nitrate and urea. Liquid fertilizers of the present invention generally possess reduced freeze points and reduced salt-out temperatures.

Nitrogen is an essential nutrient for supporting the growth and development of plants, including grasses. Most plants grown to product food, either for human or animal consumption, arc given some form of nitrogen fertilizer. Fertilization of lawns also consumes large amounts of nitrogen fertilizers.

Urea continues to be the most widely used source of nitrogen fertilizer. While most of the urea is used in a granular form, liquid fertilizers using urea in some form continue to occupy an important segment of the fertilizer market. Probably the most common of the urea-based liquid fertilizers are aqueous urea solutions and an aqueous solution of urea and ammonium nitrate, identified as UAN solutions (Ammonium nitrate (AN) solutions without added urea also are used to some extent as a nitrogen fertilizer). The most concentrated of these aqueous solutions contains about 32% by weight nitrogen and is made from about 34 to 35% urea, 46 to 45% ammonium nitrate and the balance water. This concentrated fertilizer solution has a salt-out temperature of about 0 to -2 °C, which limits the locations where it can be safely used without added complexity in transportation and storage. The salt-out temperature can be depressed further by increasing the water content and thus sacrificing the total nitrogen concentration of the aqueous fertilizer. So in cold climates, the maximum nitrogen content of such solutions is usually about 28% by weight.

Urea solutions can be prepared at solids contents up to about 50% by weight. Solutions containing about 20% urea are common for lawn fertilizer applications. Such solutions also must be handled appropriately to avoid complications due to urea crystallization (salt out) at low temperatures.

Once applied to the soil, urea in such fertilizers is enzymatically converted to ammonia by urease, an enzyme produced by endogenous microorganisms in the soil. The ammonia then is hydrolyzed rapidly to ammonium ions. In the soil, some of the ammonium ions, whether from the hydrolyzed ammonia or from ammonium nitrate, are assimilated directly by plants, but most are converted to nitrate by the process of nitrification. Once in the nitrate form, the nitrogen is more readily assimilated directly by plants.

Although in widespread use, one of the problems with using urea, AN and UAN solutions as the nitrogen source is that some fraction of the nitrogen is lost after application in various ways, including volatilization as ammonia, denitrification to gaseous nitrogen and nitrate leaching. It has been estimated that the nitrogen loss for such fertilizers falls somewhere between 30% and 60%.

The fertilizer art also has developed a wide variety of liquid fertilizers based on the reaction between urea and formaldehyde. Such urea-formaldehyde resin fertilizers have been formulated and used as a way of providing a more controlled (sometimes characterized as an extended) release of the nitrogen values so that the availability of the nitrogen hopefully is tailored more closely to the time-course nitrogen requirements of the plants. In this way, it is thought that the nitrogen loss commonly associated with the quick release nitrogen fertilizers, such as urea and UAN solutions, can be reduced. However, when formulated at high solids contents to maximize the total nitrogen value, these liquid fertilizers sometimes present their own stability problems.

Notwithstanding these inherent inefficiencies and potential problems, liquid fertilizers based on such formulations continue to be an attractive way of applying nitrogen fertilizers to plants. For that reason, the fertilizer art continues to search for improved compositions and ways for providing a concentrated nitrogen fertilizer liquid that is more stable and less prone to salting-out.

US 3,515,533 discloses a stable fertilizer ammoniating solution comprising urea and formaldehyde as individual fertilizers, whereby ammonium nitrate is used as a stabilizer in order to avoid the formation of precipitates consisting of urea-formaldehyde polymers.

US 3,092,486 discloses a process for preparing an ammoniating solution containing urea and formaldehyde, whereby ammonium nitrate is added and forms hexamethylenetetramine after reaction with the formaldehyde.

US 2002/0043086 A1 discloses a controlled release urea-formaldehyde liquid resin for use as a fertilizer and a method for its manufacture.

US 4,304,588 describes a process for the preparation of a storage-stable concentrate of water-soluble nitrogenous compounds for the foliar feeding of plants comprising reacting an aqueous solution of urea and formaldehyde under specific conditions.

US 6,306,194 B1 refers to a controlled release liquid urea formaldehyde fertilizer prepared by combining formaldehyde, urea and ammonia under conditions resulting in the formation of a resin.

US 5,449,394 describes a method of preparing a liquid nonpolymeric controlled release nitrogen plant food composition by the condensation reaction of about one molecule ammonia, about two molecules of urea and about three molecules of formaldehyde under specific reaction conditions.

The present invention provides an aqueous nitrogen fertilizer composition comprising a mixture of a urea-formaldehyde resin and a nitrogen fertilizer source selected from the group consisting of urea, ammonium nitrate and a mixture of urea and ammonium nitrate having a solids concentration of at least 70% by weight; wherein the urea-formaldehyde resin has a cyclic urea content, based on 100% resin solids, of greater than 40% by weight and a free urea content of less than 10% by weight; wherein the urea-formaldehyde resin is prepared by reacting urea, formaldehyde and ammonia at a formaldehyde/urea/ammonia mole ratio of 1-4/1/0.5-1 in water under an alkaline reaction condition.

In another embodiment, the present invention provides a method of fertilizing comprising applying to a plant the aqueous fertilizer composition of the present invention.

Preferred embodiments are set forth in the subclaims.

The present invention is based on the discovery that the combination of concentrated liquid fertilizers containing controlled release urea-formaldehyde resins with urea solutions, ammonium nitrate (AN) solutions and urea-ammonium nitrate (UAN) solutions can produce a liquid fertilizer composition having an increase in its nitrogen content, relative to the urea, AN and UAN solutions alone, and having an improved thermal (low temperature) stability.

Applicants have specifically discovered that either or both the freezing point and the salt-out temperature of urea solutions, ammonium nitrate (AN) solutions and urea ammonium nitrate (UAN) solutions can be depressed by the addition of liquid fertilizer compositions of concentrated, controlled release urea-formaldehyde resins. In this way, fertilizer solutions of higher solids concentrations (and thus higher nitrogen concentrations) are possible while reducing the risk of salting out.

Thus, the present invention is directed to a liquid fertilizer composition of a high nitrogen content comprising an aqueous solution of a urea-formaldehyde resin, and a separate nitrogen fertilizer source selected from the group consisting of urea, ammonium nitrate and a mixture of urea and ammonium nitrate (also referred to herein as urea-ammonium nitrate). The invention also is directed to the related method of using the liquid fertilizer to fertilize plants, including grasses.

The first component of the liquid fertilizer composition of the present invention is an aqueous concentrated urea-formaldehyde resin solution. This component provides a controlled release nitrogen property to the liquid fertilizer. This component also causes the ultimate liquid fertilizer composition to have improved freeze point and/or salt-out temperature.

In accordance with the present invention, the aqueous concentrated urea-formaldehyde resin solution is prepared by reacting urea and formaldehyde and ammonia under alkaline reaction conditions. The use of a formaldehyde (F) to urea (U) to ammonia (A) mole ratio (F:U:A)in a specific range for making the concentrated urea-formaldehyde resin solution, is defined in claim 1. There are a variety of processes known in the prior art for making such resins and in the broadest aspects of the present invention such processes and the resulting aqueous urea-formaldehyde solutions are intended to be embraced by the present invention. It is important that the reaction between the urea, formaldehyde and the ammonia be conducted under alkaline reaction conditions so that methylolated urea species are formed. Reaction temperatures between 50 and 100 °C are common, with a reaction time period as short as 30 minutes or as long as 5 hours being possible.

According to the present invention, a urea-formaldehyde resin of a higher triazone (cyclic urea) content is utilized as the aqueous solution of a urea-formaldehyde resin. Applicants have determined that this higher triazone-containing urea-formaldehyde resin similarly helps to reduce the freeze point and especially the salt out temperature of solutions made with a nitrogen fertilizer source selected from the group consisting of urea, ammonium nitrate and a mixture of ammonium nitrate and urea (*e.g*., UAN). It is expected that the resulting solutions will exhibit desirable extended-release fertilization profiles as well.

Suitable urea-formaldehyde resins of a higher triazone (cyclic urea) content can be prepared by reacting formaldehyde, urea and ammonia at a mole ratio (F:U:A) in the range of 1.0-4.0:1.0:0.5-1.0. In such resins, the ratio of cyclic ureas to di- and tri-substituted ureas and mono-substituted ureas varies with the mole ratio of the reactants. For example, a resin prepared at a mole ratio or 2.0:1.0:0.5 (F:U:A) would be expected to produce a solution containing approximately 42% cyclic ureas, approximately 28% di/tri-substituted ureas, approximately 24% mono-substituted ureas, and approximately 5% free urea.

Methods for making such higher triazone-containing urea-formaldehyde resins are known to those skilled in the art. Especially preferred arc those urca-formaldehyde resins having a high content of cyclic urea and a low content of free urea. Urea-formaldehyde resins of a high cyclic urea content suitable for use in this preferred aspect of the invention are described, for example, in U.S. 6,114,491. As described in Example 1 of this patent, urea-formaldehyde resins with cyclic urea contents in excess of 75% can be prepared.

Still other ways of making triazone (cyclic urea)-containing urea-formaldehyde resins are known to those skilled in the an and in its broadest aspects the present invention is not to be limited to any particular resin type. In this regard, reference is made to U.S. Patents Nos. 4,554,005; 4,599,102; 4,778,510 and 5,674,971, which describe the preparation of urea-formaldehyde resins containing cyclic ureas.

As above, it is preferred to produce a liquid concentrate of the urea-formaldehyde resin having a solids content of above 80% by weight and especially above 90% by weight, measured as the residual solids following heating at 105 °C. Such concentrated urea-formaldehyde resins can be prepared by using concentrated raw materials or by distilling an aqueous resin solution made at a lower solids concentration, usually under a vacuum.

As noted above, a solution of the urea, formaldehyde and ammonia reactants is heated to about 80 °C to about 95 °C, preferably to about 85 °C to about 90 °C, and held for at least about 45 minutes, preferably about 45 minutes to about 120 minutes, more preferably about 60 to about 75 minutes, to ensure triazone formation and to complete reaction of formaldehyde. The pH of the solution is at least 7, preferably about 7.5 to about 10.5, and more preferably about 8.5 to about 9.5.

The other component of the liquid fertilizer composition of the present invention is an aqueous solution of a nitrogen fertilizer source selected from the group consisting of urea, ammonium nitrate (AN) and an aqueous solution of urea-ammonium nitrate (UAN). Urea solutions containing urea in an amount of about 20 to 50% by weight urea are commercially available and are easily made by dissolving a solid source of urea, such as prilled urea, in water. AN solutions containing 21 % nitrogen and UAN solutions containing 28%, 30% and 32% nitrogen also are commercially available, and other customized concentrations and formulations can be obtained. The present invention is not limited to any particular source or concentration of urea, AN and/or UAN solutions. A UAN solution generally is prepared from 50% by weight ammonium nitrate and 50% by weight urea. Both continuous and batch-type process can be used for making urea, AN and UAN solutions. In such processes, especially in the case of UAN solutions, concentrated urea and ammonium nitrate solutions are measured, mixed and cooled.

To make the liquid nitrogen fertilizer composition of the present invention, it only is necessary to prepare a blend of an aqueous urea-formaldehyde resin solution and the nitrogen fertilizer source selected from an aqueous solution of urea, an aqueous solution of ammonium nitrate (AN) or an aqueous solution of urea-ammonium nitrate (UAN) with thorough mixing. In the case of urea in particular, it may be suitable to simply dissolve a solid source of urea into an aqueous urea-formaldehyde resin solution to accomplish the required blending of the aqueous solutions. No specialized mixing equipment is needed. In some circumstances heating may be advisable or necessary to assist the initial, complete dissolution of the blended materials.

In accordance with the present invention, the aqueous urea-formaldehyde resin solution (UF) and the nitrogen fertilizer source selected from the group consisting of an aqueous solution of urea (U), an aqueous solution of ammonium nitrate (AN) or an aqueous solution of urea-ammonium nitrate (UAN) are mixed in a weight ratio (UF:U; UF:AN or UF:UAN) of 90:10 to 10:90, often in the range of 80:20 to 20:80, more often in the range of 75:25 to 25:75 and most often in the range of 30:70 to 70:30, usually depending on the desired ratio of quick release and controlled release nitrogen desired in the final liquid fertilizer formulation. In the case of blends of AN or UAN and concentrated urea-formaldehyde resins of high cyclic urea content (and preferably of low free urea content), the aqueous urea-formaldehyde resin solution and the aqueous solution of ammonium nitrate (AN) or the aqueous solution of urea-ammonium nitrate (UAN) preferably are mixed in a weight ratio (UF:AN or UF:UAN) of 30:70 to 50:50 a desirable extended release nitrogen profile can be obtained.

As noted above, by using a urea-formaldehyde resin of a high cyclic urea content and especially one having a low urea content, preferably a urea-formaldehyde resin having a cyclic urea content above 60%, (and having a urea content of below 10% and especially below 5%) an aqueous blend of ammonium nitrate (or urea-ammonium nitrate) and urea-formaldehyde resin having a highly desirable extended nitrogen release profile can be obtained.

A concentrated urea-formaldehyde resin can typically exhibit a nitrogen content of about 25%, so a blend with a UAN solution (32% nitrogen) at a mixing ratio of urea-formaldehyde resin to UAN solution of 30:70 will produce a fertilizer solution of about 30% nitrogen.

A small amount of other additives also can be included in the liquid fertilizer compositions of the present invention. For example, in specific applications, a herbicide, certain micronutrients, a coloring agent or dye and other known fertilizer additives may safely be added to the composition without significantly degrading the thermal stability of the fertilizer composition.

The liquid fertilizer composition of the present invention is made at high solids concentrations, *i.e*., at a solids content of at least 70% by weight and at a solids content of at least 80% by weight and thus has a high nitrogen content. The liquid fertilizer composition of the present invention also has a broader temperature range over which it remains fluid with no appreciable precipitation of solids and thus it can be applied to plants, including gasses, in the same manner as any of the conventional liquid urea, AN and UAN fertilizer solutions.

### EXAMPLE 1 (Repeated from Example 2 of U.S. 6,632,262)

The following ingredients were combined by adding in the following order: UFC, first addition of ammonium hydroxide, first addition of urea, second addition of ammonium hydroxide, and second addition of urea. The combination was heated to 85 °C to 90 °C and held for 60 minutes. The pH was monitored every 15 minutes and adjusted as necessary to maintain a pH between 8.6 and 10 using 25% caustic.

| **Ingredient** | **Concentration** | **Weight %** |
|---|---|---|
| UFC, 85% | 85 | 37.9 |
| Ammonium hydroxide | 28 | 0.5 |
| Urea, prill | 100 | 28.4 |
| Ammonium hydroxide | 8 | 15.4 |
| Urea, prill | 100 | 18.3 |
| Caustic | 25 | to adjust pH |
| Formic Acid | 23 | to adjust pH |
| Water | | to adjust % N |

The combination was then cooled to 25 °C and analyzed for % nitrogen and % free urea (by ¹³C-NMR).

Results: % Nitrogen was 29.9; pH was 10.1; % Free urea was 50% which corresponds to <50% quick release. Blends exhibited excellent stability.

The nitrogen concentration (and the solids concentration) can be increased by vacuum distillation of the resulting urea-formaldehyde resin liquid fertilizer product.

### EXAMPLE 2 (Repeated from Example 1 of U.S. 6,114,491) (Example 2b) is a reference example)

### Preparation of Urea-formaldehyde Resins of high Cyclic Urea Content

a) A urea-formaldehyde resin containing cyclic urea was prepared at a mole ratio of 2.0:1.0:0.5, formaldehyde:urea:ammonia (F:U:A), by charging a reaction vessel with formaldehyde, ammonia, and urea while maintaining the temperature below about 65 °C. Once all the reactants were in the reaction vessel, the resulting solution was heated to about 90 °C., for about 1 hour until the reaction was complete, Once the reaction was complete, the solution was cooled to room temperature. C¹³-NMR indicated approximately 42.1% of the urea was contained in the triazone ring structure, 28.5% of the urea was di/tri-substituted, 24.5% of the urea was mono-substituted, and 4.9% of the urea was free.
b) A second urea-formaldehyde resin containing cyclic urea was prepared in the same manner as a) except for the mole ratio of 1.2:1.0:0.5 (F:U:A) was used. C¹³-NMR indicated approximately 25.7% of the urea was contained in the triazone ring structure, 7.2% of the urea was di/tri-substituted, 31.9% of the urea was mono-substituted, and 35.2% of the urea was free. (Reference Example)
c) A third urea-formaldehyde resin containing cyclic urea was prepared in the same manner as a) except for the mole ratio (F:U:A) of 3:1:1 and it was heated to about 90 °C. for 1 hour and then 100 °C. for 2 hours. C¹³-NMR indicated approximately 76.0% of the urea was contained in the triazone ring structure, 15.3% of the urea was di/tri-substituted, 8.1% of the urea was mono-substituted, and 0.6% of the urea was free.
d) A fourth urea-formaldehyde resin containing cyclic urea was prepared in the same manner as a) except for the mole ratio (F:U:A) of 4:1:1 and it was heated to about 90 °C. for 3 hours and the pH was controlled around 7.5. C¹³-NMR indicated approximately 79.2% of the urea was contained in the triazone ring structure, 17.7% of the urea was di/tri-substituted, 1.6% of the urea was mono-substituted, and 1.5% of the urea was free.

### EXAMPLE 3

Aqueous urea-formaldehyde resin solutions prepared substantially in accordance with the procedure of Example 1 were processed (using vacuum distillation) to a solids content of about 80% by weight and 92% by weight respectively. These aqueous urea-formaldehyde resin solutions are identified in the following Table as UF-1 and UF-2, respectively. Mixtures of the urea-formaldehyde resin solutions and a commercially available 21% nitrogen by weight AN solution and a commercially available 32% nitrogen by weight UAN solution were prepared at various weight ratios as shown in the following Table. The total solids content of the various aqueous formulations, measured as the residual solids following heating at 105 °C, and the nitrogen content (weight %) of the aqueous formulations also are reported in the Table. The freeze points and the salt out temperatures for the various solutions were measured by the Galbraith Laboratories, Knoxville, TN and also are reported in the following Table.

All of the blends embraced by the present invention stored at a temperature of 23-25 °C have remained free of solids for 180 days.

**TABLE**

| SAMPLE | % Solids | % N | Freeze Point °C | Salt-Out Temp. °C |
|---|---|---|---|---|
| UF-1 | 80.7 | 34.6 | - | - |
| UF-2 | 92.1 | 39.7 | - | - |
| UAN | 80.9 | 31.9 | - | 0 |
| 50% UAN/50% UF-1 | 78.8 | 33.2 | <-19.7 | No distinct crystal formation |
| 50% UAN/50% UF-2 | 84.4 | 35.7 | <-20 | No distinct crystal formation |
| 70%UAN/30% UF-1 | 78.8 | 33.0 | <-19.9 | -3.1 |
| 70% UAN/30% UF-2 | 82.1 | 34.2 | <-20 | -6.6 |
| AN | 65.4 | 21.6 | - | 6 |
| 50% AN/50% UF-1 | 72.7 | 29.1 | <-20 | No distinct crystal formation |
| 50% AN/50% UF-2 | 77.8 | 31.2 | <-20 | -10.3 |
| 70% AN/30% UF-1 | 69.5 | 26.8 | <-20 | -3.5 |
| 70% AN/30 % UP-2 | 72.6 | 28.4 | <-20 | -0.7 |

The notation "no distinct crystal formation" indicates that the solution remained clear and that there was no visible formation of solids before the solution reached its freeze point.

The data in the Table shows that the addition of the urea-formaldehyde solution (UF-1 and UF-2) to the AN and/or UAN solutions suppressed the salt-out temperatures of both the AN and the UAN solutions. Moreover, because of the higher nitrogen content of the urea-formaldehyde solutions, it was possible to achieve nitrogen contents in the blends above 32% by weight, the maximum nitrogen content of UAN solutions.

### EXAMPLE 4

An aqueous urea-formaldehyde resin solution prepared substantially in accordance with the procedure of Example 2a) was processed (using vacuum distillation) to a solids content of about 70% by weight. This aqueous urea-formaldehyde resin solution is identified in the following Table as UFP. Mixtures of the urea-formaldehyde resin solution and a commercially available 32% nitrogen by weight UAN solution (80% by weight solids) were prepared at various weight ratios as shown in the following Table. The freeze points and the salt out temperatures for the various solutions were measured by the Galbraith Laboratories, Knoxville, TN and also are reported in the following Table.

For the UAN solutions, salt out occurs within 48 hours at 3 °F (-16 °C); while the 70% UAN-32/30% UFP mixture has remained solids free for over 120 days at 3 °F (-16 °C).

**TABLE**

| SAMPLE | % Solids (approx.) | % N | Freeze Point °C | Salt-Out Temp. °C |
|---|---|---|---|---|
| UFP | 70 | 25 | -40 | <-40 |
| UAN28 | 70 | 28 | - | -10 |
| UAN32 | 80 | 32 | - | 0 |
| 50% UAN32/50% UFP | 75 | 29 | -37 | -27 |
| 70% UAN32/30% UFP | 77 | 30 | -40 | -31 |

The data in the Table shows that the addition of the urea-formaldehyde solution (UFP) to UAN solution suppressed the salt-out temperature.

### EXAMPLE 5

Compositions of the present invention were compared against other available sources of nitrogen fertilizer including urea, ESN (a slow release granular product available from Agrium), UAN solution, and Nitamin® 30L (an extended release nitrogen liquid fertilizer product available from Georgia-Pacific). Fertilizer incubation tests were conducted by the International Fertilizer Development Center and the results of their testing is reported below. In particular, presented in the Table below are the six week concentrations of ammonium and nitrate. As understood by those skilled in the art, the longer the fertilizer is in the ammonium form, the more extended is the nitrogen release profile. Additionally, eventual conversion to the nitrate form is desired as once in the nitrate form, the nitrogen is more readily assimilated directly by plants. As shown in the table below, blends of the present invention have especially desirable release profiles similar to Nitamin® 30L (U.S. 6,632,262). For comparison, the high cyclic urea content urea-formaldehyde resin used in preparing the UF/UAN blends of the present invention also was tested and is reported in the table as the Urea-formaldehyde polymer (UFP).

**TABLE**

| Product | Six Week Ammonium Concentration | Six Week Nitrate Concentration |
|---|---|---|
| Urea | 2 | 80 |
| ESN | 4 | 84 |
| UAN | 10 | 94 |
| Nitamin® 30L | 33 | 55 |
| 30% Concentrated UF:70% UAN | 32 | 66 |
| 50% Concentrated UF:50% UAN | 44 | 50 |
| UFP | 60 | 23 |

## Claims

1. An aqueous nitrogen fertilizer composition comprising a mixture of a urea-formaldehyde resin and a nitrogen fertilizer source selected from the group consisting of urea, ammonium nitrate and a mixture of urea and ammonium nitrate having a solids concentration of at least 70% by weight; wherein the urea-formaldehyde resin has a cyclic urea content, based on 100% resin solids, of greater than 40% by weight and a free urea content of less than 10% by weight; wherein the urea-formaldehyde resin is prepared by reacting urea, formaldehyde and ammonia at a formaldehyde/urea/ammonia mole ratio of 1-4/1/0.5-1 in water under an alkaline reaction condition.

2. The aqueous nitrogen fertilizer composition of claim 1 wherein the urea-formaldehyde resin is prepared by reacting a solution of urea, formaldehyde and ammonia at a temperature from 80°C to 95°C and a pH from 7.5 to 10.5 for 45 to 120 minutes.

3. The aqueous nitrogen fertilizer composition of claim 1 prepared by blending an aqueous urea-ammonium nitrate solution having a nitrogen content from 28 to 32% by weight with an aqueous solution of a urea-formaldehyde resin.

4. The aqueous nitrogen fertilizer composition of claim 1 wherein an aqueous urea-formaldehyde resin solution (UF) is mixed with a nitrogen fertilizer source selected from the group consisting of an aqueous solution of urea (U), an aqueous solution of ammonium nitrate (AN) and an aqueous solution of urea-ammonium nitrate (UAN) in a weight ratio (UF:U, UF:AN or UF:UAN) of 90:10 to 10:90.

5. The aqueous nitrogen fertilizer composition of claim 1 wherein an aqueous urea-formaldehyde resin solution (UF) is mixed with a nitrogen fertilizer source selected from the group consisting of an aqueous solution of urea (U), an aqueous solution of ammonium nitrate (AN) and an aqueous solution of urea-ammonium nitrate (UAN) in a weight ratio (UF:U, UF:AN or UF:UAN) of 70:30 to 30:70.

6. The aqueous nitrogen fertilizer composition of claim 1 wherein an aqueous urea-formaldehyde resin solution (UF) is mixed with a nitrogen fertilizer source selected from the group consisting of an aqueous solution of urea (U), an aqueous solution of ammonium nitrate (AN) and an aqueous solution of urea-ammonium nitrate (UAN) in a weight ratio (UF:U, UF:AN or UF:UAN) of 30:70 to 50:50.

7. An aqueous nitrogen fertilizer composition of claim 1 or 5 having a solids concentration of at least 80% by weight.

8. A method of fertilizing comprising applying to a plant the aqueous fertilizer composition of claim 1, 3 or 5.

## Patentansprüche

1. Wässrige Stickstoffdüngerzusammensetzung, umfassend ein Gemisch von einem Harnstoff-Formaldehyd-Harz und einer Stickstoffdüngerquelle ausgewählt aus der Gruppe bestehend aus Harnstoff, Ammoniumnitrat und einem Gemisch von Harnstoff und Ammoniumnitrat mit einer Feststoffkonzentration von wenigstens 70 Gew.-%; wobei das Harnstoff-Formaldehyd-Harz einen Gehalt an cyclischem Harnstoff von mehr als 40 Gew.-% bezogen auf 100 % Harzfeststoffe und einen Gehalt an freiem Harnstoff von weniger als 10 Gew.-% aufweist% wobei das Harnstoff-Formaldehyd-Harz durch Umsetzen von Harnstoff, Formaldehyd und Ammoniak mit einem Formaldehyd/Harnstoff/Ammoniak-Molverhältnis von 1-4/1/0,5-1 in Wasser unter einer alkalischen Reaktionsbedingung hergestellt ist.

2. Wässrige Stickstoffdüngerzusammensetzung gemäß Anspruch 1, wobei das Harnstoff-Formaldehyd-Harz durch Umsetzen einer Lösung von Harnstoff, Formaldehyd und Ammoniak bei einer Temperatur von 80 °C bis 95 °C und einem pH-Wert von 7,5 bis 10,5 über einen Zeitraum von 45 bis 120 Minuten hergestellt ist.

3. Wässrige Stickstoffdüngerzusammensetzung gemäß Anspruch 1, hergestellt durch Mischen einer wässrigen Harnstoff-Ammoniumnitrat-Lösung mit einem Stickstoffgehalt von 28 bis 32 Gew.-% mit einer wässrigen Lösung eines Harnstoff-Formaldehyd-Harzes.

4. Wässrige Stickstoffdüngerzusammensetzung gemäß Anspruch 1, wobei eine wässrige Harnstoff-Formaldehyd-Harz-Lösung (UF) mit einer Stickstoffdüngerquelle ausgewählt aus der Gruppe bestehend aus einer wässrigen Lösung von Harnstoff (U), einer wässrigen Lösung von Ammoniumnitrat (AN) und einer wässrigen Lösung von Harnstoff-Ammoniumnitrat (UAN) in einem Gewichtsverhältnis (UF:U, UF:AN oder UF:UAN) von 90:10 bis 10:90 gemischt ist.

5. Wässrige Stickstoffdüngerzusammensetzung gemäß Anspruch 1, wobei eine wässrige Harnstoff-Formaldehyd-Harz-Lösung (UF) mit einer Stickstoffdüngerquelle ausgewählt aus der Gruppe bestehend aus einer wässrigen Lösung von Harnstoff (U), einer wässrigen Lösung von Ammoniumnitrat (AN) und einer wässrigen Lösung von Harnstoff-Ammoniumnitrat (UAN) in einem Gewichtsverhältnis (UF:U, UF:AN oder UF:UAN) von 70:30 bis 30:70 gemischt ist.

6. Wässrige Stickstoffdüngerzusammensetzung gemäß Anspruch 1, wobei eine wässrige Harnstoff-Formaldehyd-Harz-Lösung (UF) mit einer Stickstoffdüngerquelle ausgewählt aus der Gruppe bestehend aus einer wässrigen Lösung von Harnstoff (U), einer wässrigen Lösung von Ammoniumnitrat (AN) und einer wässrigen Lösung von Harnstoff-Ammoniumnitrat (UAN) in einem Gewichtsverhältnis (UF:U, UF:AN oder UF:UAN) von 30:70 bis 50:50 gemischt ist.

7. Wässrige Stickstoffdüngerzusammensetzung gemäß Anspruch 1 oder 5 mit einer Feststoffkonzentration von wenigstens 80 Gew.-%.

8. Verfahren zum Düngen, umfassend Aufbringen der wässrigen Stickstoffdüngerzusammensetzung gemäß Anspruch 1, 3 oder 5 auf eine Pflanze.

## Revendications

1. Composition d'engrais azoté aqueuse, comprenant un mélange d'une résine urée-formaldéhyde et d'une source d'engrais azoté choisie dans le groupe constitué par l'urée, le nitrate d'ammonium et un mélange d'urée et de nitrate d'ammonium ayant une concentration en matière sèche d'au moins 70% en poids ; où la résine urée-formaldéhyde possède une teneur en urée cyclique, sur la base de 100% de matière sèche de résine, supérieure à 40% en poids et une teneur en urée libre inférieure à 10% en poids, dans laquelle la résine urée-formaldéhyde est préparée par la réaction d'urée, de formaldéhyde et d'ammoniac selon un rapport molaire formaldéhyde/urée/ammoniac de 1-4/1/0,5-1 dans l'eau dans des conditions de réaction alcalines.

2. Composition d'engrais azoté aqueuse selon la revendication 1, dans laquelle la résine urée-formaldéhyde est préparée par la réaction d'une solution d'urée, de formaldéhyde et d'ammoniac à une température allant de 80°C à 95°C et à un pH allant de 7,5 à 10,5 pendant de 45 à 120 minutes.

3. Composition d'engrais azoté aqueuse selon la revendication 1, préparée par le mélange d'une solution aqueuse d'urée-nitrate d'ammonium ayant une teneur en azote allant de 28 à 32% en poids avec une solution aqueuse d'une résine urée-formaldéhyde.

4. Composition d'engrais azoté aqueuse selon la revendication 1, dans laquelle une solution aqueuse d'une résine urée-formaldéhyde (UF) est mélangée avec une source d'engrais azoté choisie dans le groupe constitué par une solution aqueuse d'urée (U), une solution aqueuse de nitrate d'ammonium (AN) et une solution aqueuse d'urée-nitrate d'ammonium (UAN) selon un rapport pondéral (UF:U, UF:AN ou UF:UAN) allant de 90:10 à 10:90.

5. Composition d'engrais azoté aqueuse selon la revendication 1, dans laquelle une solution aqueuse d'une résine urée-formaldéhyde (UF) est mélangée avec une source d'engrais azoté choisie dans le groupe constitué par une solution aqueuse d'urée (U), une solution aqueuse de nitrate d'ammonium (AN) et une solution aqueuse d'urée-nitrate d'ammonium (UAN) selon un rapport pondéral (UF:U, UF:AN ou UF:UAN) allant de 70:30 à 30:70.

6. Composition d'engrais azoté aqueuse selon la revendication 1, dans laquelle une solution aqueuse d'une résine urée-formaldéhyde (UF) est mélangée avec une source d'engrais azoté choisie dans le groupe constitué par une solution aqueuse d'urée (U), une solution aqueuse de nitrate d'ammonium (AN) et une solution aqueuse d'urée-nitrate d'ammonium (UAN) selon un rapport pondéral (UF:U, UF:AN ou UF:UAN) allant de 30:70 à 50:50.

7. Composition d'engrais azoté aqueuse selon la revendication 1 ou 5, ayant une concentration en matière sèche d'au moins 80% en poids.

8. Méthode de fertilisation, comprenant l'application à une plante de la composition d'engrais aqueuse selon la revendication 1, 3 ou 5.
